# EUROPÄISCHE PATENTSCHRIFT

(11) **EP 1 257 446 B1**
(45) Veröffentlichungstag und Bekanntmachung des Hinweises auf die Patenterteilung: **30.11.2005**
(21) Anmeldenummer: 01907358.4
(22) Anmeldetag: 16.01.2001
(51) Int. Cl.: B60S 1/38

(54) **WISCHBLATT FÜR SCHEIBEN INSBESONDERE VON KRAFTFAHRZEUGEN UND VERFAHREN ZUM HERSTELLEN DES WISCHBLATTS**
WIPER BLADE FOR GLASS SURFACES ESPECIALLY OF MOTOR VEHICLES, AND METHOD FOR PRODUCING SUCH A WIPER BLADE
BALAI D'ESSUIE-GLACE CONCU POUR DES VITRES EN PARTICULIER POUR DES VITRES DE VEHICULES, ET PROCEDE DE FABRICATION DE CE BALAI D'ESSUIE-GLACE

(30) Priorität: 08.02.2000 DE 10005418
(43) Veröffentlichungstag der Anmeldung: 20.11.2002
(73) Patentinhaber: ROBERT BOSCH GMBH, 70442 Stuttgart (DE)
(72) Erfinder: MERKEL, Wilfried, 77876 Kappelrodeck (DE); KOTLARSKI, Thomas, 370 04 Ceské Budejovice (CZ); DE BLOCK, Peter, B-3545 Halen (BE); DAENEN, Roger, B-3770 Vlytingen-Riemst (BE)
(86) Internationale Anmeldenummer: PCT/DE2001/000145
(87) Internationale Veröffentlichungsnummer: WO 2001/058732

(56) Entgegenhaltungen:
- EP-A- 0 528 643
- DE-A- 19 729 864
- US-A- 3 192 551

## Beschreibung

### Stand der Technik

Die Erfindung geht aus von einem Wischblatt nach der Gattung des Anspruchs 1 wie es aus der DE-A-197 29 864 bekannt ist. Bei einem anderen bekannten Wischblatt dieser Art (DE 23 13 689 A1) weisen die beiden in die Längsnuten der Wischleiste eintauchenden, ein Paar bildenden Federschienen sowohl das gleiche Breitenmaß als auch die gleiche Dicke auf. Damit die von einem mit dem Wischblatt verbundenen Wischerarm ausgehende Anlegekraft über die gesamte Länge der Wischleiste möglichst gleichmäßig auf die zu wischende Scheibe verteilt wird, sind die beiden Federschienen in einer von der Scheibe abgehobenen Position in deren Längserstreckung gesehen mit einer Krümmung versehen, die von dem Krümmungsverlauf des ihnen während des Wischbetriebs gegenüberliegenden beziehungsweise von dem Wischblatt überstrichenen Scheibenbereichs abweicht. Auch der Krümmungsverlauf der beiden zusammengehörigen Federschienen ist üblicherweise gleich.

Sowohl die Federschienenbreite, die Federschienendicke als auch der Krümmungsverlauf der Federschienen bilden Dimensionierungs-Kennwerte, welche bei der Auslegung des Wischblatts erarbeitet werden. Diese als Idealwerte ermittelten Kennwerte werden für jede Wischanlage der einzelnen Kraftfahrzeugtypen neu festgelegt. Wesentliche Kriterien können dabei unter anderem der Verlauf der zu überstreichenden Scheibenoberfläche, die Scheibenneigung zur ausströmenden Luft, die Ausrichtung der Wischerarm-Pendelachse zu dieser Scheibenoberfläche, die maximale Fahrzeuggeschwindigkeit, die Länge des Wischblatts und ggf. dessen Ausstattung mit einer Windabweisleiste sein. Der sich bei der Wischblattauslegung daraus ergebende Kennwert für die Breite einer einstückigen Federschiene wird dann halbiert, so daß sich hinsichtlich Breite, der Dicke und der Krümmung zwei völlig gleiche Federschienen ergeben.

Bei Wischblättern dieser Art kann es - zumindest bei bestimmten Betriebsbedingungen zum sogenannten Rattern des Wischblatts während seiner Wischbewegung kommen, wodurch das Wischergebnis beeinträchtigt und ein unerwünschtes, störendes Betriebsgeräusch erzeugt wird.

Es hat sich gezeigt, daß die Ursache dafür in Resonanzfrequenzen begründet sein kann, auf die sich das Wischblatt während seiner Wischbewegung einschwingt.

### Vorteile der Erfindung

Bei dem erfindungsgemäßen Wischblatt mit den kennzeichnenden Merkmalen des Anspruchs 1 wird der Aufbau einer eindeutigen, störenden Resonanzfrequenz vermieden, weil die eine Federschiene dem Aufbau einer solchen in der anderen Federschiene und umgekehrt entgegenwirkt. Zwar mögen zum Wischblatt noch weitere Elemente wie zum Beispiel eine Anschlußvorrichtung zum Verbinden des Wischblatts mit dem angetriebenen Wischerarm oder Elemente zum Sichern der Federschienen in den Längsnuten der Wischleiste gehören, doch haben diese auf das eingangs dargelegte Problem der Resonanzschwingungen keinen exakt bestimmbaren Einfluß.

Diese unterschiedlichen Resonanzfrequenzen der beiden zu einem Paar gehörenden Federschienen können dadurch erreicht werden, daß als Dimensionierungs-Kennwert die Breite der Federschienen benutzt ist, wobei die Breite der einen Federschiene größer ist als die Breite der anderen Federschiene, was fertigungstechnisch einfach zu bewerkstelligen ist. Diese Maßnahme gilt auch dann, wenn die beiden Längskanten der einen oder der beiden Federschienen nicht parallel zueinander verlaufen.

Eine weitere Möglichkeit zum Verändern der Resonanzfrequenzen der beiden zu einem Paar gehörenden Federschienen bietet sich erfindungsgemäβ an, wenn als Dimensionierungskennwert die Dicke der Federschienen benutzt ist, wobei die Dicke der einen Federschiene gröβer ist als die Dicke, der anderen Federschiene.

Eine weitere einfache Möglichkeit zum Verändern der Resonanzfrequenzen der beiden zu einem Paar gehörenden Federschienen ergibt sich, wenn als Dimensionierungskennwert die Eigenschaften des Materials zur Herstellung der Federschienen benutzt ist, wobei die Eigenschaften des Materials der einen Federschiene von den Eigenschaften des Materials zur Herstellung der anderen Federschiene abweichen.

Schließlich ergibt sich bei Wischblättern, bei denen die beiden ein Paar bildende Federschienen in einer von der Scheiben abgehobenen Position in ihrer Längserstreckung gesehen eine Krümmung aufweisen, die von dem Verlauf des ihnen gegenüberliegenden Scheibenbereichs abweicht eine weitere besonders einfache Variante wenn als Dimensionierungskennwert die Krümmungen der Federschienen benutzt ist wobei der Krümmungsverlauf der einen Federschiene von dem Krümmungsverlauf der anderen Federschiene abweicht.

Bei besonders problematischen Anwendungsfällen hat es sich als vorteilhaft erwiesen, wenn zumindest zwei Dimensionierungskennwerte der einen Federschiene von den entsprechenden Dimensionierungskennwerten der anderen Federschiene abweichen.

Die bei der Abstimmung des Federschienenpaares sich ergebenen Idealgrößen der Summenkennwerte werden für dessen Einzel-Federschienen zweckmäßig so verändert, daß die eine der beiden Federschienen zu wenigstes einem der Ideal-Kennwerte eine Plus-Abweichung und die andere der beiden Federschienen zum entsprechenden Ideal-Kennwert eine Minus-Abweichung aufweisen derart, daß die Größe der Plus-Abweichung bezogen auf die Größe der Minus-Abweichung dem betreffenden, zuvor festgelegten Ideal- oder Summenkennwert entspricht, so wie dieser bei den bekannten Wischblättern mit zwei gleichen Einzelfederschienen realisiert ist.

Ein einfaches, kostengünstig realisierbares Verfahren zum Herstellen eines erfindungsgemäßen Wischblatts sieht vor, daß in einem ersten Verfahrensschritt die Idealgrößen der einzelnen Summen-Kennwerte eines Federschienenpaares festgelegt werden und danach zumindest eine dieser Idealgrößen der einen Federschiene um eine bestimmte Teilgröße vergrößert und die entsprechende Idealgröße der anderen Federschiene um die wenigstens annähernd gleiche Teilgröße verkleinert wird und weiter die beiden zu einem Paar gehörenden Einzel-Federschienen nach den so ermittelten, von der betreffenden Idealgröße abweichenden Sollgrößen hergestellt und schließlich zusammen mit der Wischleiste zu dem Wischblatt zusammengefügt werden.

Weitere vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

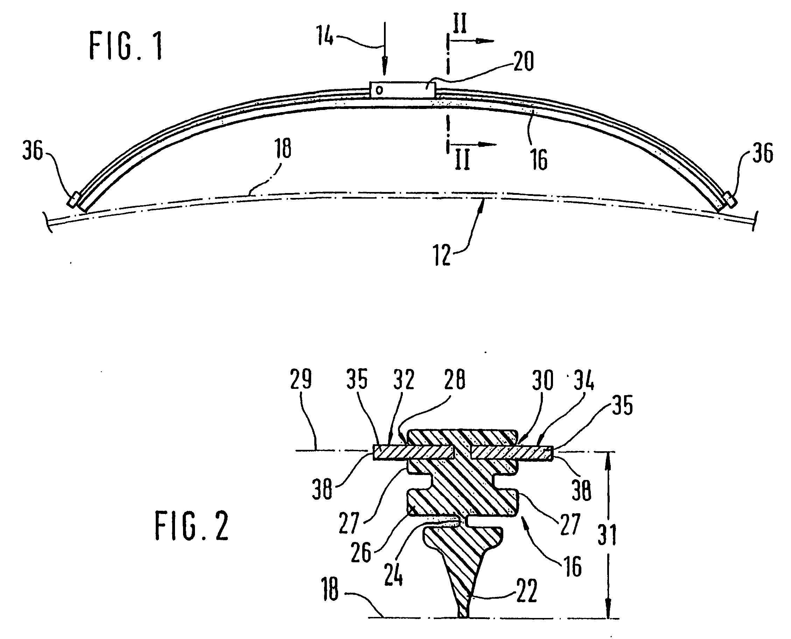

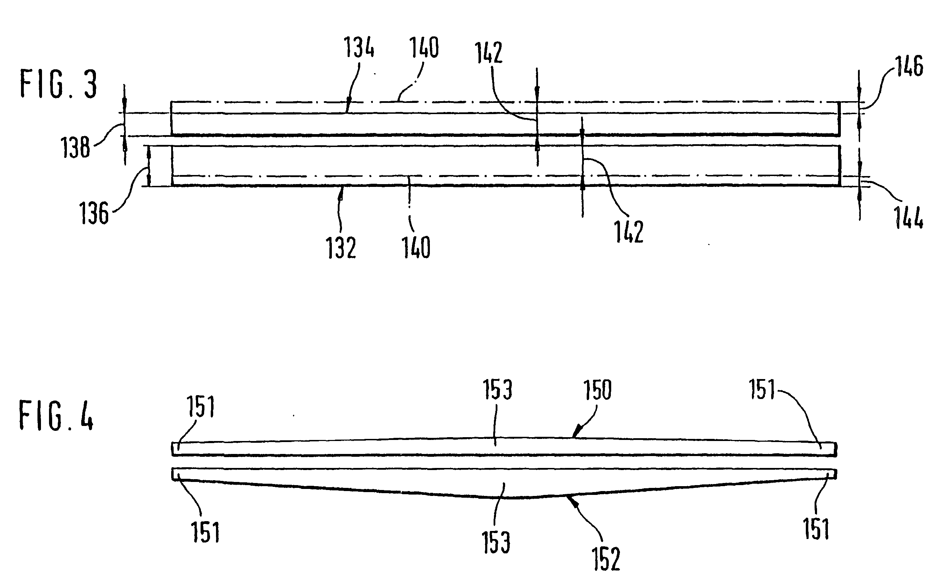

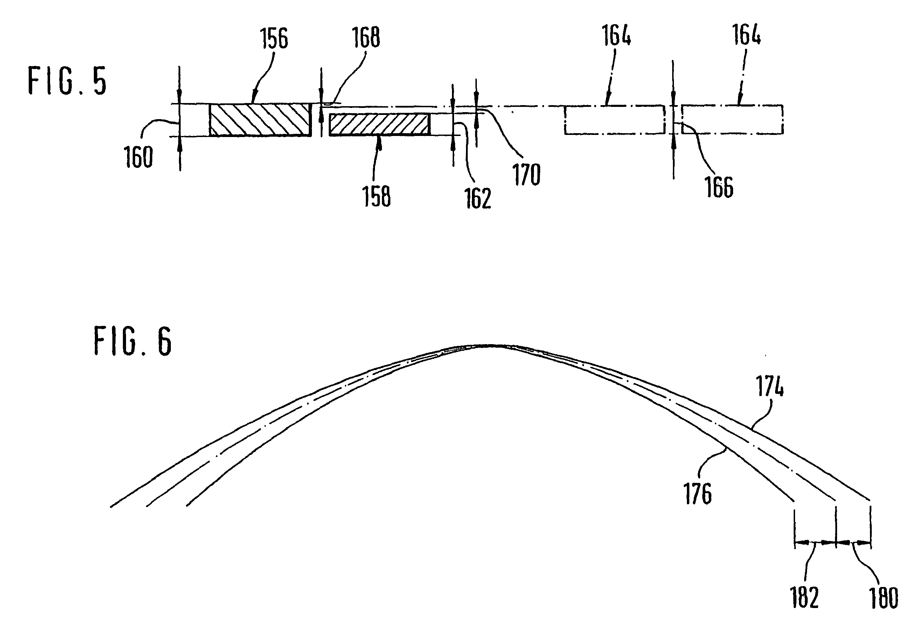

In der Zeichnung zeigen: Figur 1 die Seitenansicht eines erfindungsgemäßen Wischblatts in einer strichpunktiert angedeuteten, von der zu wischenden Scheibe abgehobenen Position, Figur 2 die Schnittfläche eines Schnitts entlang der Linie II-II durch das Wischblatt gemäß Figur 1 in vergrößerter Darstellung, Figur 3 eine Draufsicht auf zwei zu einem Paar gehörende "Federschienen" des Wischblatts, Figur 4 eine Draufsicht auf zwei zu einem Paar gehörende, anders ausgebildete Federschienen, Figur 5 einen Schnitt gemäß Figur 2 durch zwei zu einem Paar gehörende Federschienen des Wischblatts in vergrößerter, unmaßstäblicher Darstellung und Figur 6 eine Prinzipdarstellung der Krümmungen von zwei zu einem Paar gehörenden Federschienen des Wischblatts gemäß Fig. 1.

Figuren 3, 4 und 6 betreffen nicht die Erfindung selbst.

### Beschreibung der Ausführungsbeispiele

Ein in Figur 1 in Seitenansicht dargestelltes Wischblatt 10 ist in seiner Längserstreckung - wenn es völlig unbelastet ist - stärker gekrümmt als die von ihm zu überstreichenden Scheibenbereiche. Die zu wischende Scheibe ist dort strichpunktiert dargestellt und mit der Bezugszahl 12 versehen. Dabei soll die Krümmung der Scheibe 12 den stärksten Krümmungsbereich einer sphärisch ungleichmäßig gekrümmten Scheibe darstellen. Das langgestreckte Wischblatt 10 wird während des Wischbetriebs durch eine von einem nicht dargestellten Wischerarm ausgehende Anlegekraft (Pfeil 14) mit seiner Wischleiste 16 an der Oberfläche 18 der Scheibe 12 angelegt und quer zu seiner Längserstreckung über die Scheibe verschoben. Dazu ist das Wischblatt 10 in seinem Mittelabschnitt mit einer Anschlußvorrichtung 20 für den Wischerarm versehen. Wie die in Figur 2 dargestellte Querschnittsfläche des Wischblatts 10 zeigt, hat die aus einem gummielastischen Material bestehende Wischleiste 16 eine die eigentliche Wischarbeit ausführende Wischlippe 22, die über einen sogenannten Kippsteg 24 mit einer Kopfleiste 26 der Wischleiste verbunden ist. An den beiden einander gegenüberliegenden Längs-Seitenflächen 27 der Kopfleiste 26 ist die Wischleiste 16 mit jeweils einer zur LängsSeitenfläche 27 hin offenen Längsnut 28 und 30 versehen. Die beiden Längsnuten 28 und 30 sind in einer gemeinsamen Ebene 29 angeordnet, die sich mit Abstand 31 vor der Scheibe 12, 18 befindet. In jeder der beiden Längsnuten 28 und 30 ist eine langgestreckte, federelastische Schiene 32 beziehungsweise 34 untergebracht. Da beim Ausführungsbeispiel die Breiten der beiden Federschienen 32 und 34 größer sind als die Tiefen der Längsnuten 28 und 30 ragen die beiden Federschienen jeweils mit einem Randstreifen 35 aus ihren Längsnuten 28, 30 heraus. Diese Ausgestaltung ist jedoch nicht zwingend erforderlich. Es ist genauso denkbar, daß das Maß der Federschienenbreite etwa so groß ist wie das Maß der Nuttiefe. Die beiden Federschienen 32 und 34 bilden ein zusammengehöriges Paar und dienen als Tragelement zum Halten des Wischblatts 10 am Wischerarm sowie der ordnungsgemäßen Verteilung der Anlegekraft 14 über die gesamte Länge des Wischblatts 10. Die Sicherung der Federschienen 32, 34 in ihren Längsnuten 28, 30 wird durch an den beiden Enden des Wischblatts angeordnete Kappen 36 übernommen, welche die seitlichen Längskanten 38 der Federschienen 32, 34 umgreifen und mit diesen beispielsweise verrastet sind. Auch die Anschlußvorrichtung 20 ist auf ähnliche Weise mit den Federschienen und damit mit dem Wischblatt 10 fest verbunden. Der anhand der Figur 1 beschriebene Krümmungsverlauf des Wischblatts 10 wird durch eine entsprechende, im Zuge der Wischblattauslegung festgelegte Krümmung des Tragelements 32, 34 bewirkt. Ebenso wird bei der Auslegung des Wischblatts 10 auf die jeweiligen Gegebenheiten an der zu wischenden Scheibe - beziehungsweise nach den jeweiligen Anforderungen an das Wischblatt - die Dicke der Tragelement-Federschienen beziehungsweise die wirksame Gesamtbreite des Tragelements 32, 34 festgelegt.

Die besonderen, möglichen Ausgestaltungen der zum Tragelement gehörenden Federschienen 30, 34 sollen nun anhand der Figuren 3 bis 6 näher erläutert werden. Die in Figur 3 dargestellte Draufsicht auf ein zusammengehöriges Federschienenpaar 132, 134 zeigt, daß die Breite 136 der einen Federschiene 132 größer ist als die Breite 138 der anderen Federschiene 134. Die Gesamtbreite 136 plus 138 des Tragelements 132, 134 entspricht der wirksamen Idealbreite bzw. dem Ideal-Dimensionierungskennwert, die sich bei der Auslegung des Wischblatts beziehungsweise bei der Auslegung des Tragelements ergeben hat.

Bei herkömmlichen Wischblättern hat man nun diese Gesamtbreite halbiert und so zwei Federschienen erhalten, welche die gleiche Breite aufweisen.

Die Breite der Einzelschienen eines solchen Federschienenpaares ist in Figur 3 durch die strichpunktierten Linien 140 angedeutet und mit der Bezugszahl 142 versehen worden.

Abweichend von diesem herkömmlichen Verfahrensschritt ist beim erfindungsgemäßen Wischblatt nun die Breite 136 um eine Plus-Abweichung 144 breiter als die Breite 142 der nach der herkömmlichen Methode errechneten Federschienenbreite. Die Breite 138 der anderen Federschiene 134 weist gegenüber der nach der herkömmlichen Methode errechneten Breite 142 eine Minus-Abweichung 146 auf. Da die Größe der Plus-Abweichung und die Größe der Minus-Abweichung einander entsprechen, bleibt die wirksame Gesamtbreite des aus den beiden Federschienen 132 und 134 bestehenden Tragelements gleich der Breite, welche sich aus der Breite der beiden nach dem herkömmlichen Verfahren ausgelegten Federschienen 140 ergeben würde. Es ist also die Idealbreite des Tragelements beziehungsweise die Gesamtbreite der zu einem Tragelement gehörenden, ein Paar bildenden Federschienen als Dimensionierungskennwert benutzt worden, wobei die Kennwerte der einzelnen Federschienen 132 und 134 voneinander abweichen. Die Summe dieser Kennwerte entspricht jedoch den Kennwerten der in Figur 3 strichpunktiert angedeuteten Federschienen 140.

Die anhand der Figur 3 erläuterte Maßnahme bleibt natürlich nicht auf Federschienen beschränkt, welche über ihre gesamte Länge die gleiche Breite aufweisen. Vielmehr ist es durchaus denkbar, auch Federschienen erfindungsgemäß auszubilden, deren errechneten Idealbreiten von vorn herein unterschiedlich groß sind und/oder die an ihren beiden Enden 151 schmaler sind als in ihrem Mittelabschnitt 153. Zur Verdeutlichung dieser Aussage wird auf die Figur 4 verwiesen, in welcher derartige Federschienen 150 und 152 als Paar dargestellt sind.

Eine Ausgestaltung eines erfindungsgemäßen Wischblatts soll anhand der Figur 5 erläutert werden. Der dort mit ausgezogenen Linien dargestellte Querschnitt durch zwei zu einem Paar gehörenden Federschienen 156 und 158 zeigt, daß die Dicke 160 der Federschiene 156 größer ist als die Dicke 162 der anderen Federschiene 158. Die bei der Erläuterung von Figur 3 angestellten Überlegungen zur Breite der Federschienen 132 und 134 werden nun entsprechend auf die hier als Dimensionierungskennwert herangezogene Tragelement- bzw. Federschienendicke übertragen. In Figur 5 ist strichpunktiert auch der Querschnitt eines Paares von Federschienen 164 dargestellt, wobei die Dicke 166 der beiden Federschienen 164 gleich groß ist. Diese Idealdicke bzw. dieser Ideal-Dimensionierungskennwert 166 ist bei der Auslegung des Wischblatts beziehungsweise des Tragelements unter Berücksichtigung der an das Wischblatt gestellten Anforderungen festgelegt und bei den herkömmlichen Wischblättern so realisiert worden. Zur Auslegung des erfindungsgemäßen Wischblatts wird nun die Dicke 166 als Dimensionierungskennwert herangezogen und die Dicke 160 der Federschiene 156 gegenüber der Dicke 166 um eine bestimmte Plus-Abweichung 168 vergrößert und im Gegenzug dazu die Dicke 162 der anderen Federschiene 158 um eine der Größe der Plus-Abweichung wenigstens annähernd entsprechende Minus-Abweichung 170 gegenüber der Dicke 166 verkleinert. Dadurch ist die Dicke der einen Federschiene 156 nun größer als die Dicke 158 der anderen Federschiene. Da beim Ausführungsbeispiel gemäß Figur 5 die Breite der Federschienen gleich gewählt worden ist, ergibt sich als Summenkennwert für die Federschienendicke beziehungsweise für die Tragelementdicke ein Wert, der völlig dem Idealwert 166 entspricht, welcher sich bei der Auslegung eines Wischblatts nach der herkömmlichen Methode mit zwei gleich dicken Federschienen 164 ergibt. Aber auch hier gilt, daß es bei problematischen Anwendungsfällen von Vorteil sein kann, wenn sich die Größen der Plus-Abweichung und der Minus-Abweichung nicht völlig entsprechen.

Zur Veränderung der Eigenschaften der einen Federschiene gegenüber den Eigenschaften der anderen Federschienen ist es jedoch auch denkbar, daß zur Herstellung der einen Federschiene ein anderes Material verwendet wird, welches für die Herstellung der anderen Federschiene benutzt wird. Denkbar ist beispielsweise die Verwendung einer Kombination von Stahl- und Kunststoffederschienen oder dergleichen.

Gemäß einer weiteren Ausführungsform (in Figur 6 dargestellt) ist es auch möglich den Krümmungsverlauf der beiden zu einem Paar gehörenden Federschienen als Rechnungs-oder Dimensionierungskennwert heranzuziehen. Gemäß Figur 6 zeigt die gekrümmte Linie 174 den Krümmungsverlauf der einen Federschiene bzw. diese Federschiene, während die andere Linie 176 den Krümmungsverlauf der anderen Federschiene bzw. die Federschiene selbst darstellt. Eine strichpunktiert eingezeichnete, zwischen den beiden Linien 174 und 176 verlaufende weitere gekrümmte Linie 178 soll idealen Krümmungsverlauf für die beiden zu einem Paar gehörenden, das Tragelement bildenden Federschienen darstellen. Die Linie 178 ergibt sich bei der Auslegung des Wischblatts und stellt - unter Berücksichtigung der Auslegungskriterien - den seither realisierten Idealverlauf und somit den Ideal-Dimensionierungskennwert für das Tragelement- bzw. für die Federschienenkrümmung dar. Beim Wischblatt weicht jedoch der Krümmungsverlauf der einen Federschiene 174 von dem Krümmungsverlauf der anderen Federschiene 176 ab. Bezogen auf die Ideal-Verlaufslinie 178 hat die Federschiene 174 eine Plus-Abweichung 180 der Krümmung, während der Krümmungsverlauf der anderen Federschiene 176 bezogen auf die Idealkrümmung 178 eine Minus-Abweichung 182 hat. Vorteilhaft entspricht dabei die Plus-Abweichung 180 in ihrer Größe der Größe der Minus-Abweichung 182. Von dieser Regel kann in bestimmten Grenzen auch abgewichen werden, wenn eine solche Maßnahme aufgrund der Auslegungskriterien sinnvoll erscheint. Bei dieser Ausführungsform ist somit der Krümmungsverlauf der Federschienen beziehungsweise der Krümmungsverlauf des Tragelements als Dimensionierungskennwert herangezogen worden.

Abweichend von den beschriebenen Ausführungsbeispielen - bei denen der Größe der jeweiligen Plus-Abweichung eine entsprechende Größe der Minus-Abweichung gegenübersteht - kann es bei bestimmten Anwendungsfällen aber auch von Vorteil sein, wenn beispielsweise der Wert für die Plus-Abweichung 144 bzw. 168 bzw. 180 der einen Federschiene 132 bzw. 156 bzw. 174 größer oder kleiner ist als die Minus-Abweichung 146 bzw. 170 bzw. 182 der anderen Federschiene 134 bzw. 158 bzw. 176 von dem entsprechenden Ideal-Dimensionierungskennwert 142 bzw. 166 bzw. 178.

Allen Ausführungsbeispielen ist gemeinsam, daß die beiden Federschienen 132, 134 bzw. 150, 152 bzw. 156, 158 bzw. 174, 176 eines Schienenpaares - aufgrund ihrer voneinander abweichenden Ausbildung hinsichtlich der Breite und/oder der Dicke und/oder der Materialeigenschaften und/oder des Krümmungsverlauf - unterschiedliche Resonanzfrequenzen aufweisen.

Bei besonders schwierigen Anwendungsfällen hat es sich als vorteilhaft beziehungsweise als notwendig erwiesen, daß zumindest zwei Dimensionierungskennwerte der einen Federschiene von den entsprechenden Dimensionierungskennwerten der anderen Federschiene abweichen.

Neben den schon beschriebenen gegenständlichen Merkmalen des erfindungsgemäßen Wischblatts soll nachfolgend nun noch auf ein Verfahren zum Herstellen eines solchen Wischblatts eingegangen werden. In einem ersten Verfahrensschritt müssen dazu alle Idealgrößen der einzelnen Summenkennwerte eines Federschienenpaares festgelegt werden. Diese Kennwerte betreffen in erster Linie die Gesamtbreite des aus den beiden Federschienen bestehenden, ein Federschienenpaar umfassenden Tragelements beziehungsweise die Dicke des Tragelements und der zu diesem gehörenden Federschienen beziehungsweise die Materialauswahl zur Herstellung des Tragelements und der zu diesem gehörenden Federschienen beziehungsweise den Krümmungsverlauf des Tragelements und der zu diesem gehörenden Federschienenpaares. Nach Festlegung der Idealgrößen dieser Summenkennwerte werden diese - den Erfordernissen gemäß - für die eine Federschiene um wenigstens annähernd eine bestimmte Teilgröße vergrößert und die entsprechende Idealgröße der anderen Federschiene um wenigstens annähernd die gleiche Teilgröße verkleinert. Schließlich werden die beiden zu einem Paar gehörenden Einzel-Federschienen nach den so ermittelten, von der betreffenden Idealgröße abweichenden Sollgrößen hergestellt und zusammen mit der Wischleiste zu dem Wischblatt zusammengefügt.

Dadurch, daß die beiden Federschienen eines Schienenpaares unterschiedliche Resonanzfrequenzen aufweisen wird vermieden, daß sich da Wischblatt während des Wischbetriebs auf eine eindeutige Resonanzfrequenz einschwingt. Daraus ergibt sich ein verbessertes Wischergebnis und ein von störenden Nebengeräuschen freier Wischbetrieb.

## Patentansprüche

1. Wischblatt (10) für Scheiben insbesondere von Kraftfahrzeugen mit einer langgestreckten, gummielastischen, an der Scheibe (12) anlegbaren Wischleiste (16), die an ihren beiden Längsseiten (27) mit je einer zur Längsseite offenen Längsnut (28 bzw. 30) versehen ist, in welche jeweils eine langgestreckte, federelastische Schiene (32, 34 bzw. 132, 134 bzw. 156, 158 bzw. 174, 176) eintaucht, wobei die beiden Federschienen ein zusammengehöriges Paar bilden, dessen Dimensionierungskennwerte auf eine bestimmte Scheibenkonfiguration und weitere, fahrzeugspezifische Merkmale abgestimmt sind, wobei die beiden Federschienen (32, 34 bzw. 132, 134 bzw. 156, 158 bzw. 174, 176) eines Federschienenpaares unterschiedliche Resonanzfrequenzen aufweisen, **dadurch gekennzeichnet, dass** als Dimensionierungskennwert die Dicke der Federschienen benutzt ist und die Dicke (160) der einen Federschiene (156) größer ist als die Dicke (162) der anderen Federschiene (158).

2. Wischblatt nach Anspruch 1, **dadurch gekennzeichnet, daß** als Dimensionierungskennwert die Breite der Federschienen benutzt ist, wobei die Breite (136) der einen Federschiene (132) größer ist als die Breite (138) der anderen Federschiene (134).

3. Wischblatt nach einem der Ansprüche 1 oder 2, **dadurch gekennzeichnet, daß** als Dimensionierungskennwert die Eigenschaften des Materials zur Herstellung der Federschienen (32) benutzt sind, wobei die Eigenschaften des Materials der einen Federschiene von den Eigenschaften des Materials zur Herstellung der anderen Federschiene (34) abweichen.

4. Wischblatt nach einem der Ansprüche 1 bis 3, bei dem die beiden ein Paar bildende Federschienen in einer von der Scheibe abgehobenen Position in ihrer Längserstreckung gesehen eine Krümmung aufweisen, die von dem Verlauf des ihnen gegenüberliegenden Scheibenbereichs abweicht, **dadurch gekennzeichnet, daß** als Dimensionierungskennwert die Krümmungen der Federschienen benutzt sind, wobei der Krümmungsverlauf der einen Federschiene (174) von dem Krümmungsverlauf der anderen Federschiene (176) abweicht.

5. Wischblatt nach einem der Ansprüche 2 bis 4, **dadurch gekennzeichnet, daß** zumindest zwei Kennwerte der einen Federschiene (32) von den entsprechenden Kennwerten der anderen Federschiene (38) abweichen.

6. Wischblatt nach einem der Ansprüche 1 bis 5, bei dem die Abstimmung eines Federschienenpaares zu Idealgrößen der Summenkennwerte führt, **dadurch gekennzeichnet, daß** eine der beiden Federschienen (132 bzw. 156 bzw. 174) zu wenigstens einem der Ideal-Kennwerte (142 bzw. 166 bzw. 178) eine Plus-Abweichung (144 bzw. 168 bzw. 180) und die andere der beiden Federschienen (134 bzw. 158 bzw. 176) zum entsprechenden Ideal-Kennwert eine Minus-Abweichung (146 bzw. 170 bzw. 182) aufweist derart, daß die Größe der Plus-Abweichung verrechnet mit der Größe der Minus-Abweichung zumindest annähernd dem betreffenden Ideal-Kennwert entspricht.

7. Verfahren zum Herstellen eines Wischblatts nach einem der Ansprüche 1 bis 6, bei dem in einem ersten Verfahrensschritt die Idealgrößen der einzelnen Summen-Kennwerte eines Federschienenpaares festgelegt werden und dennoch zumindest eine dieser Idealgrößen der einen Federschiene um eine bestimmte Teilgröße (144, 168, 180) vergrößert und die entsprechende Idealgröße der anderen Federschiene um die wenigstens annähernd gleiche Teilgröße (146, 170, 182) verkleinert wird und weiter die beiden zu einem Paar gehörenden Einzelfederschienen nach den so ermittelten, von den Idealgrößen abweichenden Sollgrößen (136, 138 bzw. 160, 162 bzw. 174, 176) hergestellt und schließlich zusammen mit der Wischleiste (16) zu dem Wischblatt zusammengefügt werden.

## Claims

1. Wiper blade (10) for glass surfaces, especially of motor vehicles, with an elongate, rubber-elastic wiper strip (16), which can be placed against the glass surface (12) and is provided on each of its two longitudinal sides (27) with a longitudinal groove (28 and 30, respectively), which is open towards the longitudinal side and into which enters in each case an elongate, spring-elastic rail (32, 34 or 132, 134 or 156, 158 or 174, 176), the two spring rails forming a matching pair, the dimensional characteristic values of which are matched to a specific glass-surface configuration and further vehicle-specific features, the two spring rails (32, 34 or 132, 134 or 156, 158 or 174, 176) of a pair of spring rails having different resonant frequencies, **characterized in that** the thickness of the spring rails is used as a dimensioning characteristic value, and the thickness (160) of one spring rail (156) is greater than the thickness (162) of the other spring rail (158).

2. Wiper blade according to Claim 1, **characterized in that** the width of the spring rails is used as a dimensioning characteristic value, the width (136) of one spring rail (132) being greater than the width (138) of the other spring rail (134).

3. Wiper blade according to either of Claims 1 and 2, **characterized in that** the properties of the material for the production of the spring rails (32) are used as a dimensioning characteristic value, the properties of the material of one spring rail differing from the properties of the material for the production of the other spring rail (34).

4. Wiper blade according to one of Claims 1 to 3, in which, in a position raised from the glass surface, the two spring rails forming a pair have a curvature, when viewed along their longitudinal extent, that differs from the profile of the glass-surface region opposite to them, **characterized in that** the curvatures of the spring rails are used as a dimensioning characteristic value, the curvature profile of one spring rail (174) differing from the curvature profile of the other spring rail (176).

5. Wiper blade according to one of Claims 2 to 4, **characterized in that** at least two characteristic values of one spring rail (32) differ from the corresponding characteristic values of the other spring rail (38).

6. Wiper blade according to one of Claims 1 to 5, in which the matching of a pair of spring rails leads to ideal magnitudes of the total characteristic values, **characterized in that** one of the two spring rails (132 or 156 or 174) has a positive deviation (144 or 168 or 180) from at least one of the ideal characteristic values (142 or 166 or 178) and the other of the two spring rails (134 or 158 or 176) has a negative deviation (146 or 170 or 182) from the corresponding ideal characteristic value, such that the magnitude of the positive deviation offset against the magnitude of the negative deviation corresponds at least approximately to the ideal characteristic value concerned.

7. Method for producing a wiper blade according to one of Claims 1 to 6, in which, in a first method step, the ideal magnitudes of the individual total characteristic values of a pair of spring rails are defined and, nevertheless, at least one of these ideal magnitudes of one spring rail is increased by a certain partial magnitude (144, 168, 180), and the corresponding ideal magnitude of the other spring rail is reduced by at least approximately the same partial magnitude (146, 170, 182), and the two individual spring rails belonging to a pair are furthermore produced in accordance with the desired magnitudes (136, 138 or 160, 162 or 174, 176) determined in this way and deviating from the ideal magnitudes, and finally are joined to the wiper strip (16) to form the wiper blade.

## Revendications

1. Balai d'essuie-glace (10) notamment de véhicule, comportant une lame d'essuyage (16), allongée, ayant l'élasticité du caoutchouc et destinée à s'appliquer contre la vitre (12), cette lame ayant dans ses deux côtés longitudinaux (27) chaque fois une rainure longitudinale (28, 30) ouverte vers le côté et recevant chacune un rail élastique comme un ressort (32, 34 ou 132, 134 ou 156, 158 ou 174, 176), allongé, les deux rails élastiques formant une paire liée dont les caractéristiques dimensionnelles sont définies suivant une certaine configuration de vitre et selon d'autres caractéristiques spécifiques au véhicule, les deux rails élastiques (32, 34, 132, 134 ou 156, 158 ou 174, 176) d'une paire de rails ayant des fréquences de résonance différentes,
**caractérisé en ce que**
la caractéristique dimensionnelle est l'épaisseur des rails et l'épaisseur (260) de l'un des rails (156) est plus grande que l'épaisseur (162) de l'autre rail (158).

2. Balai d'essuie-glace selon la revendication 1,
**caractérisé en ce que**
la caractéristique dimensionnelle est la largeur des rails élastiques, cette largeur (136) d'un rail (132) étant supérieure à la largeur (138) de l'autre rail (134).

3. Balai d'essuie-glace selon l'une des revendications 1 ou 2,
**caractérisé en ce que**
la caractéristique dimensionnelle est la propriété de la matière servant à la fabrication des rails (32),
la propriété de la matière d'un rail étant différente de la propriété de la matière servant à fabriquer l'autre rail (34).

4. Balai d'essuie-glace selon l'une des revendications 1 à 3,
selon lequel
les deux rails élastiques formant une paire ont en position relevée par rapport à la vitre, lorsque les rails sont vus dans leur direction longitudinale, une courbure différente de celle de la zone de vitre située en regard,
**caractérisé en ce que**
la caractéristique dimensionnelle est la courbure des rails,
la courbure d'un rail (174) étant différente de la courbure de l'autre rail (176).

5. Balai d'essuie-glace selon l'une des revendications 2 à 4,
**caractérisé en ce qu'**
au moins deux valeurs caractéristiques d'un rail élastique (32) diffèrent des valeurs caractéristiques correspondantes de l'autre rail élastique (38).

6. Balai d'essuie-glace selon l'une des revendications 1 à 5,
selon lequel
l'accord d'une paire de rails élastiques aboutit à des grandeurs idéales des valeurs caractéristiques totales,
**caractérisé en ce que**
l'un des deux rails élastiques (132 ou 156 ou 174) correspond à au moins une valeur caractéristique idéale (142 ou 166 ou 178) avec une déviation positive (144 ou 168 ou 180) et l'autre des deux rails élastiques (134 ou 158 ou 176) correspond à la caractéristique idéale avec une déviation négative (146 ou 170 ou 182), de façon que l'amplitude de la déviation positive calculée avec l'amplitude de la déviation négative corresponde au moins sensiblement à la caractéristique idéale concernée.

7. Procédé de fabrication d'un balai d'essuie-glace selon l'une des revendications 1 à 6,
selon lequel
dans une première étape de procédé on fixe les grandeurs idéales des différentes valeurs-sommes caractéristiques d'une paire de rails élastiques, et ensuite on augmente au moins l'une de ces grandeurs idéales d'un rail élastique d'une certaine fraction de grandeur (144, 168, 180) et on diminue la grandeur idéale correspondante de l'autre rail élastique d'au moins une fraction sensiblement voisine (146, 170, 182) et, ensuite, on fabrique les deux rails élastiques séparément, faisant partie d'une paire, selon les grandeurs de consigne (136, 138 ou 160, 162 ou 174, 176) ainsi déterminées qui diffèrent des grandeurs idéales et, enfin, on les assemble à la lame d'essuyage (16) pour former le balai d'essuie-glace.
